# EUROPÄISCHE PATENTSCHRIFT

(11) **EP 2 138 077 B1**
(45) Veröffentlichungstag und Bekanntmachung des Hinweises auf die Patenterteilung: **13.06.2012**
(21) Anmeldenummer: 09163072.3
(22) Anmeldetag: 18.06.2009
(51) Int. Cl.: A47J 31/44

(54) **Kaffeemaschine**
Coffee machine
Machine à café

(30) Priorität: 19.06.2008 DE 202008008257 U
(43) Veröffentlichungstag der Anmeldung: 30.12.2009
(73) Patentinhaber: WIK Far East Ltd., North Point, Hong Kong (CN)
(72) Erfinder: Meuer, Jens Martin, 47269 Duisburg (DE)
(74) Vertreter: Haverkamp, Jens

(56) Entgegenhaltungen:
- EP-A1- 0 791 321
- EP-A1- 1 878 370
- WO-A1-2004/004523
- US-A1- 2002 134 248

## Beschreibung

Die Erfindung betrifft eine Kaffeemaschine mit einem Getränkeauslauf, aus dem der gebrühte Kaffee ausfließt, und mit einer Milchbehandlungseinrichtung, etwa einer Milchaufschäumeinrichtung.

Kaffeemaschinen, zB wie bekannt aus EP 1 878 370 A1, insbesondere so genannte Vollautomaten verfügen eine Brüheinheit mit einer Brühkammer in der sich die zum Brühen eines Kaffees befindliche Kaffeemehlmenge befindet. An den Auslauf der Brüheinheit ist ein Getränkeauslauf angeschlossen. Dieser befindet sich oberhalb einer Trinkgefäßstellfläche, auf der zum Auffangen des aus dem Getränkeauslauf im Zuge der Bereitung eines Kaffeegetränks ausfließenden gebrühten Kaffees. Der Getränkeauslauf kann höheverstellbar an der Kaffeemaschine angeordnet sein, damit der Abstand des Getränkeauslaufs von dem Trinkgefäß an die unterschiedliche Höhe unterschiedlicher Trinkgefäße angepasst werden kann. Derartige Kaffeemaschinen umfassen in aller Regel zur Bereitung von Kaffee-Milch-Mischgetränken zudem eine Milchaufschäumeinrichtung als Milchbehandlungseinrichtung. Mit einer derartigen Milchaufschäumeinrichtung wird unter Verwendung von in der Kaffeemaschine produziertem Heißdampf Milch aus einem Vorratsbehälter angesaugt, aufgeschäumt und ausgegeben. Typischer Weise befindet sich eine solche Milchaufschäumeinrichtung in einer benachbarten Anordnung und mit Abstand zu dem Getränkeauslauf zum Auslassen des gebrühten Kaffees. Die Milchaufschäumeinrichtung umfasst ausgangsseitig ein Dampfrohr, welches zum Einführen von Milchschaum in die Oberseite eines Trinkgefäßes gehalten wird. Bei einer solchen Kaffeemaschine wird in dem Trinkgefäß entweder zunächst der gebrühte Kaffee unterhalb des Getränkeauslaufes aufgefangen und anschließend nach Umsetzen des Trinkgefäßes unter die Milchaufschäumeinrichtung der damit produzierte Milchschaum oder umgekehrt. Neben den vorbeschriebenen Kaffeemaschinen sind auch solche bekannt geworden, bei denen die Milchaufschäumeinrichtung im Unterschied zu der vorbeschriebenen innerhalb der Kaffeemaschine angeordnet ist. Von der Milchaufschäumeinrichtung ist eine Milchauslaufleitung zu dem Getränkeauslauf geführt. Bei einer solchen Kaffeemaschine kann so dann gleichzeitig oder zumindest ohne das Trinkgefäß umsetzten zu müssen, gebrühter Kaffee und Milchschaum für ein und dasselbe Getränk ausgegeben werden.

Bei den zuletzt beschriebenen Kaffeemaschinen ist es aufgrund der Anordnung der Milchaufschäumeinrichtung innerhalb der Kaffeemaschine nicht ohne Weiteres möglich, die Milchauslaufleitung zu Reinigungszwecken ausbauen und anschließend wieder einbauen. Zwar verfügen diese Kaffeemaschinen über entsprechende Spülprogramme; dieses ist jedoch nicht immer ausreichend, um gerade bei einer Verwendung von Milch mit einem höheren Fettgehalt eine zufriedenstellende Reinigung durchführen zu können. Auch wenn die Ausgabe des Milchschaums und des gebrühten Kaffees in unmittelbarer Nachbarschaft zueinander erfolgt, so dass die beiden Ausgabeprodukte in einem Trinkgefäß aufgefangen werden können, dann dieses mitunter auch Nachteile mit sich bringen. Es ist bekannt, dass Milch und Milchprodukte Allergie auslösend sein können und dass bereits kleinste Mengen hierzu genügen. Bei einer Anordnung des Ausgangs der Milchauslaufleitung in unmittelbarer Nähe zu dem Getränkeauslauf für den gebrühten Kaffee kann nicht immer gänzlich ausgeschlossen werden, dass auch wenn entsprechend dem programmierten Getränkewunsch nur gebrühter Kaffee ausgegeben wird, nicht auch ein Resttropfen, beispielsweise von einem vorangegangen Getränkebereitungsprozess, bei dem auch Milchschaum ausgegeben worden ist, in das Trinkgefäß abtropft oder der bei der Ausgabe von heißem Kaffee der dabei entstehende Dampf an der Mündung der Milchauslaufleitung kondensiert und mit gelösten Milchresten in das unterhalb des Getränkeauslauf befindliche Trinkgefäß abtropft.

Ausgehend von diesem diskutiertem Stand der Technik liegt der Erfindung daher die Aufgabe zugrunde, eine Kaffeemaschine der eingangs genannten Art dergestalt weiterzubilden, dass die zu den vorbeschriebenen Kaffeemaschinen aufgezeigten Nachteile vermieden sind.

Gelöst wird dieses Aufgabe erfindungsgemäß durch eine Kaffeemaschine der eingangs genannten, gattungsgemäßen Art, bei der der Milchbehandlungseinrichtung eine flexible Milchauslaufleitung mit einem Milchauslauf an ihrem ausgabeseitigem Ende zugeordnet ist, wobei zum lösbaren Befestigen des Milchauslaufes an dem Getränkeauslauf der Milchauslauf und der Getränkeauslauf jeweils komplementär zusammenwirkende Verbindungselemente aufweisen, und die Kaffeemaschine über eine weitere Befestigungsstelle verfügt, an der die Milchauslaufleitung insbesondere mittels ihres Milchauslaufes, wenn nicht am Getränkeauslauf befestigt, festlegbar ist.

Diese Kaffeemaschine verfügt über eine flexible Milchauslaufleitung, die an die Milchbehandlungseinrichtung, beispielsweise eine Milchaufschaumeinrichtung oder eine Milcherwärmungseinrichtung angeschlossen ist oder an diese anschließbar ist. Die Milchauslaufleitung verfügt über einen Milchauslauf an ihrem ausgabeseitigen Ende. Der Milchauslauf der Milchauslaufleitung ist an dem Getränkeauslauf, der zum Ausgeben des gebrühten Kaffees dient, lösbar befestigbar. Zu diesem Zweck verfügen der Milchauslauf und der Getränkeauslauf jeweils über komplementär zusammenwirkende Verbindungselemente. Bei diesen kann es sich beispielsweise um die zusammenwirkende Elemente einer Rast- oder Klemmverbindung handeln und/oder um komplementäre Teile einer Haftmagnetbefestigung. Im letzteren Fall trägt vorzugsweise der Milchauslauf einen Haftmagneten. Als komplementäres Verbindungselement verfügt der Getränkeauslauf entweder über ein ferromagnetisches Element oder über einen zweiten Haftmagneten. Ausgenutzt wird bei dieser Kaffeemaschine die Flexibilität der Milchauslaufleitung und der lösbare Anschluss derselben an den Getränkeauslauf, um bei Bedarf den Milchauslauf von dem Getränkeauslauf abzunehmen und die Milchauslaufleitung anderweitig an der Kaffeemaschine festzulegen. Zu diesem Zweck verfügt die Kaffeemaschine über eine weitere Befestigungsstelle zum Halten des Milchauslaufes. Die Milchauslaufleitung kann somit mit ihrem Milchauslauf an den Getränkeauslauf der Kaffeemaschine mechanisch angeschlossen werden, wenn eine gleichzeitige Ausgabe von behandelter, beispielsweise aufgeschäumter Milch und gebrühtem Kaffee in ein und dasselbe Trinkgefäß gewünscht wird. Die Milchauslaufleitung bzw. der der Milchauslaufleitung zugehörige Milchauslauf werden an der zweiten Befestigungsstelle festgelegt, wenn entweder eine unabhängige Ausgabe von gebrühtem Kaffee und bereitete Milch gewünscht wird oder nur eines der beiden, insbesondere gebrühter Kaffee, ohne dass in unmittelbarer Nachbarschaft zu dem Getränkeauslauf der Milchauslauf vorhanden ist. Die weitere Befestigungsstelle der Kaffeemaschine zum Festlegen der Milchauslaufleitung kann konzipiert sein, um an dieser die Milchauslaufleitung aufzuhängen. Gemäß einer anderen Ausgestaltung ist vorgesehen, dass der Auslauf der Milchauslaufleitung in einer solchen Art und Weise an der weiteren Befestigungsstelle festlegbar ist, damit behandelte beispielsweise aufgeschäumte Milch an dieser Stelle ausgegeben werden kann. Diese zweite Befestigungsstelle ist typischer Weise so weit von dem Getränkeauslauf beabstandet, dass auch ein im Durchmesser größeres Trinkgefäß, das unter dem Getränkeauslauf zum Auffangen von gebrühtem Kaffee angeordnet ist, nicht bis unter den Milchauslauf reicht.

Gemäß einem besonders bevorzugten Ausführungsbeispiel verfügt die Kaffeemaschine über einen höhenverstellbaren Getränkeauslauf zum Anpassen der Höhe desselben an die Höhe eines darunter angeordneten Trinkgefäßes. Bei dieser Ausgestaltung trägt der höhenverstellbare Teil des Getränkeauslaufes das oder die zu dem Milchauslauf komplementären Verbindungselemente, so dass durch die Höhenverstellung des Getränkeauslaufes unter Ausnutzung der flexiblen Eigenschaften der Milchauslaufleitung ebenfalls der Milchauslauf in seinem Abstand zu einem unterhalb des Getränkeauslaufs befindlichen Trinkgefäß einrichtbar ist.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht einer Kaffeemaschine mit einer Milchaufschäumeinrichtung und einer Milchauslaufleitung,
- **Fig. 2:**: eine vergrößerte perspektivische Ansicht auf die Anordnung der Milchauslaufleitung der Kaffeemaschine der Figur 1,
- **Fig. 3:**: eine weitere Darstellung der Anordnung der Milchauslauflei- tung der Kaffeemaschine der Figur 1,
- **Fig. 4:**: eine perspektivische Ansicht der Milchaufschäumeinrichtung mit der darin angeschlossenen Milchauslaufleitung,
- **Fig. 5:**: die Einheit der Figur 4 in einer anderen Perspektive und
- **Fig. 6:**: eine perspektivische Ansicht von unten auf die Milchauf- schäumeinrichtung und den benachbart dazu angeordneten Getränkeauslauf der Kaffeemaschine der Figur 1 mit der Milchauslaufleitung in einer anderen Anordnung.

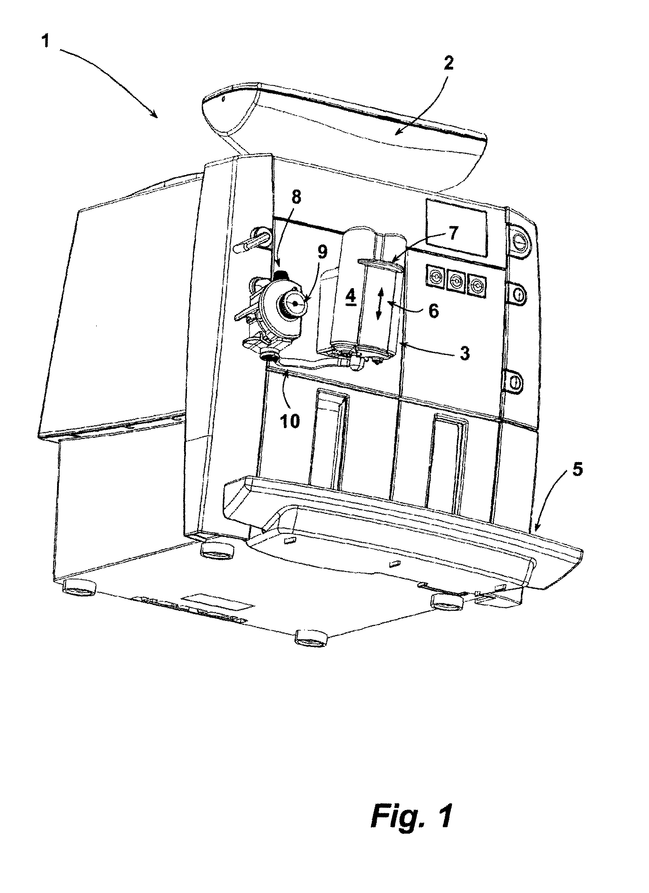

Eine Kaffeemaschine 1 ist als so genannter Kaffeevollautomat konzipiert. Die Kaffeemaschine 1 verfügt über einen Kaffeebohnenbehälter 2 zum Bevorraten von Kaffeebohnen für die Kaffeebereitung. Innerhalb der Kaffeemaschine 1 ist eine Brüheinheit angeordnet. Diese ist an einen Getränkeauslauf 3 angeschlossen. Der Getränkeauslauf 3 ist innerhalb eines Auslaufgehäuses 4, wie durch den Doppelpfeil in Figur 1 kenntlich gemacht, hinsichtlich seines Abstandes zu einer unterhalb des Getränkeauslaufs 3 angeordneten Aufstellfläche 5 für Tassen höheverstellbar konzipiert. Zu diesem Zweck verfügt der Getränkeauslauf 3 über einen Schieber 6 mit einer an seinem oberen Abschluss befindlich Handhabe 7 zum Bewegen des Schiebers 6.

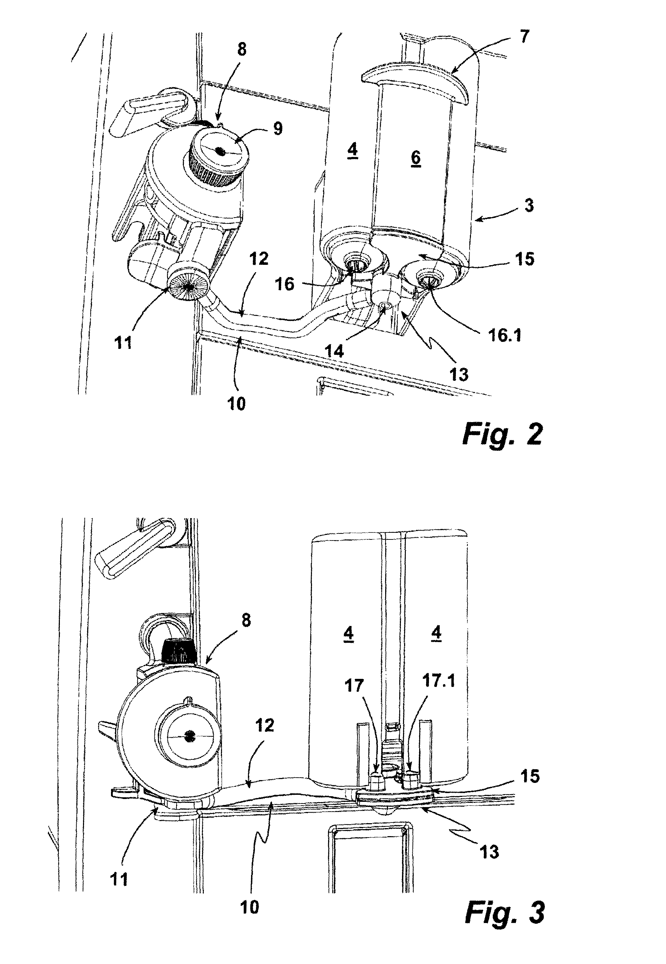

Mit Abstand zu dem Getränkeauslauf 3 ist bei dem dargestellten Ausführungsbeispiel ebenfalls an der Frontseite der Kaffeemaschine 1 eine Milchaufschäumeinrichtung 8 (Milkfrother) zumindest teilweise aus dem Gehäuse der Kaffeemaschine 1 herausragend angeordnet. Ein Stellrad 9 dient zum Einstellen der gewünschten Milchbehandlung. Die Milchaufschäumeinrichtung 8 ist in nicht dargestellter Art und Weise Milch an einen Milchvorratsbehälter angeschlossen. Gleichfalls ist die Milchaufschäumeinrichtung 8 an einen Dampfgenerator der Kaffeemaschine 1 angeschlossen. Der Milchaufschäumeinrichtung 8 ist eine insgesamt mit dem Bezugszeichen 10 gekennzeichnete Milchauflaufleitung zugeordnet, durch die die beispielsweise aufgeschäumte Milch austritt. Die Milchauslaufleitung 10 trägt an ihrem einen Ende, wie dieses deutlich in Figur 2 erkennbar ist, ein Kupplungsstück 11, welches zum Anschließen der Milchauslaufleitung 10 an die Milchaufschäumeinrichtung 8 in eine unterseitig bezüglich der Milchaufschäumeinrichtung 8 angeordnete Ausgangsöffnung abgedichtet, beispielsweise unter Zwischenschaltung einer Gummipassung eingesetzt ist. Das Kupplungsstück 11 verfügt über eine vertikale Eingangsöffnung. Angeschlossen an das Kupplungsstück 11 ist ein flexibles Schlauchstück 12, welches radial an das Kupplungsstück 11 angeschlossen ist. Der Schlauch 12 ist vorzugsweise ein Silikonschlauch. An seinem dem Kupplungsstück 11 gegenüberliegenden Ende ist an den Schlauch 12 ein Milchauslauf 13 mit einer Milchaustrittsöffnung 14 angeschlossen. Die Milchaustrittsöffnung ist in Figur 2 mit dem Bezugszeichen 14 gekennzeichnet. Teil des Milchauslaufes 13 ist ein Verbindungsstück 15, mit dem der Milchauslauf 13 an die Getränkeauslauf 3 der Kaffeemaschine 1 in der in den Figuren 1 bis 3 gezeigten Anordnung angeschlossen ist. Figur 2 zeigt, dass es sich bei dem Getränkeauslauf 3 der Kaffeemaschine 1 um einen Zwillingsauslauf handelt. Die Austrittsöffnungen, aus denen der gebrühte Kaffee austritt, sind in dieser Figur mit den Bezugszeichen 16 und 16.1 gekennzeichnet. Angeschlossen ist das Verbindungsstück 15 an den höheneinrichtbarem Teil des Getränkeauslaufes 3 und zwar von unten. Das Verbindungsstück 15 ist lösbar an den Getränkeauslauf 3 angeschlossen und verfügt zum positionsgenauen Anordnen des Milchauslaufes 13 über Positionierzapfen 17, 17.1 (vgl. Figur 3), die zwischen den Schieber 6 und die unteren Rohrabschnitte der beiden Ausläufe des Getränkeauslaufes 3 einpassen. Figur 3 zeigt den Getränkeauslauf 3 mit abgenommenen Schieber 6, wodurch die Anordnung der Positionierzapfen 17, 17.1 des an dem Getränkeauslauf 3 angeschlossenem Milchauslaufes 13 erkennbar ist.

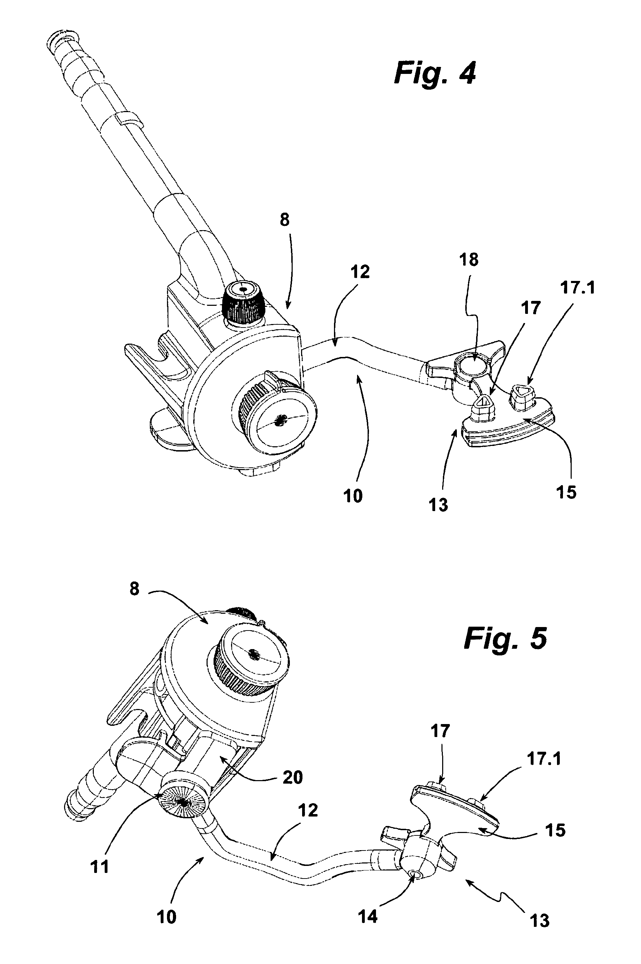

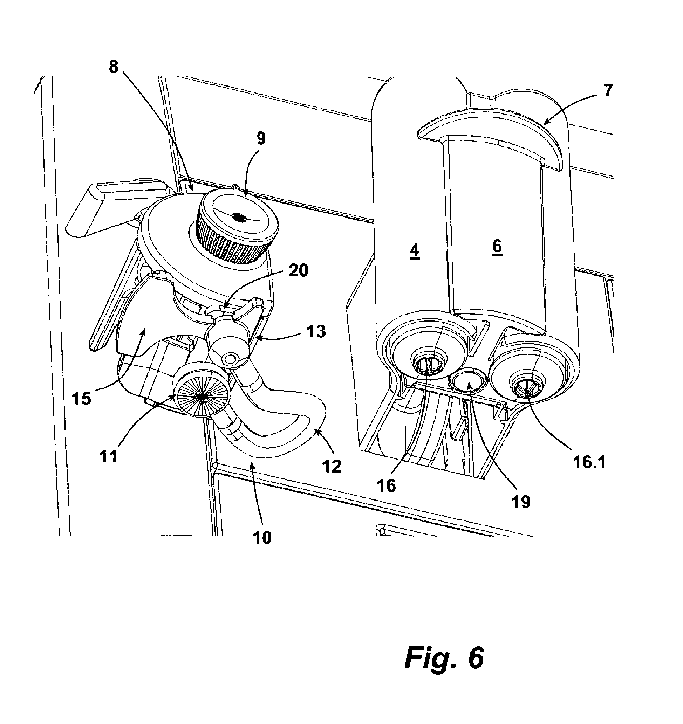

Zum Halten des Milchauslaufes 13 ist seiner in den Figuren 1 bis 3 gezeigten, an den Getränkeauslauf 3 angeschlossenen Stellung dienen zwei Haftmagnete, von denen ein Haftmagnet 18 an der Oberseite des Verbindungsstückes 15 des Getränkeauslaufes 13 angeordnet ist (vgl. Figur 4). An der Unterseite des Getränkeauslaufes 3 befindet sich, wie aus Figur 6 ersichtlich, ein bezüglich seiner Polarität komplementär angeordneter Haftmagnet 19. Das Zusammenwirken der Haftmagnete 18, 19 hält das Verbindungsstück 15 und damit den Milchauslauf 13 in seiner in den Figuren 1 bis 3 gezeigten Stellung, in der der Milchauslauf 13 an den Getränkeauslauf 3 angeschlossen ist. Das Verbindungsstück 15 schließt, wie aus Figur 2 ersichtlich, vorderseitig bündig oder in etwa bündig mit der Außenseite des Schiebers 6 ab. Zum Anbringen des Milchauslaufes 13 an den Getränkeauslauf 3 kann das Verbindungsstück 15 seitlich ergriffen und gehandhabt werden. Dadurch ist gewährleistet, dass bei einer gewünschten Höheverstellung des Getränkeauslaufs 3 nicht versehentlich das Verbindungsstück 15 mit dem Milchauslauf 13 von dem Getränkeauslauf 3 abgenommen wird, sondern für die Höhenverstellung die Handhabe 7 des Schiebers ergriffen wird.

Figur 5 zeigt in einer perspektivischen Ansicht von unten die Milchaufschäumeinrichtung 8 mit der daran angeschlossenen Milchauslaufleitung 10. Diese Darstellung macht deutlich, dass an der Unterseite der Milchaufschäumeinrichtung 8 das Kupplungsstück 11 bereichsweise einfassend ein als Verbindungselement dienendes Verbindungsstück 20 angeordnet ist. Das Verbindungsstück 20 ist aus Metall gefertigt und verfügt über ferromagnetische Eigenschaften. Das Verbindungsstück 20 dient zum lösbaren Festlegen des Milchauslaufes 13, wenn dieser nicht an den Getränkeauslauf 3 angeschlossen werden soll. Das Anschließen des Milchauslaufes 13 an diese weitere, der Milchaufschäumeinrichtung 8 zugeordnete Befestigungsstelle ist in Figur 6 gezeigt. In dieser Anordnung des Milchauslaufes 13 befindet sich dieser von dem Getränkeauslauf 3, aus dem gebrühter Kaffee ausgegeben wird, in einem Abstand, der ausreichend groß ist, damit aus dem Milchauslauf 13 austretende Milch nicht in ein unterhalb des Getränkeauslaufes 3 positioniertes Trinkgefäß eintropfen kann. Die Handhabung des Milchauslaufes 13 ist durch die Verwendung der in dem dargestellten Ausführungsbeispiel beschriebenen komplementär zusammenwirkenden Verbindungselemente - der Haftmagnete 18, 19 - einfach und verschleißfrei ausgeführt.

Das Kupplungsstück 11 kann, wenn gewünscht aus der Auslauföffnung der Milchaufschäumeinrichtung 8 herausgenommen werden, damit anschließend, wenn gewünscht, ein herkömmliches Milchauslaufrohr in diese Öffnung der Milchaufschäumeinrichtung 8 eingesetzt werden kann.

Bei dem dargestellten Ausführungsbeispiel, bei dem der Milchauslauf der Milchauslaufleitung entweder an dem Getränkeauslauf zum Auslassen des gebrühten Kaffees oder an einer weiteren Position, beispielsweise der Milchaufschäumeinrichtung angeordnet werden kann, gibt einem Benutzer die Möglichkeit, den Milchauslauf in beiden Positionen je nach Bedarf zum Ausgeben von heißer Milch oder auch zum Ausgeben von Heißwasser benutzen zu können.

Die vorstehende Beschreibung der in den Ansprüchen beanspruchten Kaffeemaschine macht deutlich, dass die Funktionalität dieser Kaffeemaschine gegenüber herkömmlichen aufgrund der flexiblen Milchauslaufleitung deutlich erhöht ist.

### Bezugszeichenliste

- 1: Kaffeemaschine
- 2: Kaffeebohnenbehälter
- 3: Getränkeauslauf
- 4: Auslaufgehäuse
- 5: Aufstellfläche
- 6: Schieber
- 7: Handhabe
- 8: Milchaufschäumeinrichtung
- 9: Stellrad
- 10: Milchauslaufleitung
- 11: Kupplungsstück
- 12: Schlauch
- 13: Milchauslauf
- 14: Öffnung
- 15: Verbindungsstück
- 16, 16.1: Öffnung
- 17, 17.1: Positionierzapfen
- 18: Haftmagnet
- 19: Haftmagnet
- 20: Verbindungsstück

## Patentansprüche

1. Kaffeemaschine mit einem Getränkeauslauf (3), aus dem der gebrühte Kaffee ausfließt, und mit einer Milchbehandlungseinrichtung (8), etwa einer Milchaufschäumeinrichtung, **dadurch gekennzeichnet, dass** der Milchbehandlungseinrichtung (8) eine flexible Milchauslaufleitung (10) mit einem Milchauslauf (13) an ihrem ausgabeseitigem Ende zugeordnet ist, wobei zum lösbaren Befestigen des Milchauslaufes (13) an dem Getränkeauslauf (3) der Milchauslauf (13) und der Getränkeauslauf (3) jeweils komplementär zusammenwirkende Verbindungselemente (18, 19) aufweisen, und die Kaffeemaschine (1) über eine weitere Befestigungsstelle (20) verfügt, an der die Milchauslaufleitung (10) insbesondere mittels ihres Milchauslaufes (13), wenn nicht am Getränkeauslauf (3) befestigt, festlegbar ist.

2. Kaffeemaschine nach Anspruch 1, **dadurch gekennzeichnet, dass** der Milchauslauf (13) über den einen Teil und der Getränkeauslauf (3) über den anderen Teil einer Haftmagnetbefestigung (18, 19) verfügen.

3. Kaffeemaschine nach Anspruch 1 oder 2, **dadurch gekennzeichnet, dass** die Milchauslaufleitung (10) eingangsseitig ein Kupplungsstück (11) trägt, mit dem diese an den Ausgang der Milchbehandlungseinrichtung (8) angeschlossen ist oder anschließbar ist.

4. Kaffeemaschine nach Anspruch 3, **dadurch gekennzeichnet, dass** das Kupplungsstück (11) eine in vertikaler Richtung nach oben weisende Eingangsöffnung und eine in radialer Richtung hierzu angeordnete Ausgangsöffnung mit der daran angeschlossenen Milchauslaufleitung (10) aufweist, der Unterseite der Milchbehandlungseinrichtung (8) die zweite Befestigungsstelle (20) für den Milchauslauf (13) zugeordnet ist und das Kupplungsstück (11) über ein oder mehrere zu dem oder den Verbindungselementen (18) des Milchauslaufes (13) komplementäre Verbindungselemente (20) verfügt.

5. Kaffeemaschine nach Anspruch 3 oder 4, **dadurch gekennzeichnet, dass** die Milchbehandlungseinrichtung (8) auslaufseitig eine Gummipassung aufweist, in die das Kupplungsstück (11) der Milchauslaufleitung (10) abgedichtet einsetzbar ist.

6. Kaffeemaschine nach einem der Ansprüche 1 bis 5, **dadurch gekennzeichnet, dass** die Milchbehandlungseinrichtung (8) mit ihrer Ausgangsöffnung an der Außenseite der Kaffeemaschine (1) angeordnet ist.

7. Kaffeemaschine nach einem der Ansprüche 1 bis 6, **dadurch gekennzeichnet, dass** die Milchbehandlungseinrichtung eine mit Dampf betriebene Milchaufschäumeinrichtung (8) ist.

8. Kaffeemaschine nach einem der Ansprüche 1 bis 7, **dadurch gekennzeichnet, dass** der Getränkeauslauf (3) der Kaffeemaschine (1) in Bezug auf ein darunter angeordnetes Trinkgefäß höhenverstellbar ist und der Milchauslauf (13) der Milchauslaufleitung (10) an den höhenverstellbaren Teil des Getränkeauslaufs (3) anschließbar ist.

## Claims

1. Coffee machine having a beverage outlet (3), from which the brewed coffee flows out, and having a milk conditioning device (8), for instance a milk foaming device, **characterised in that** the milk conditioning device (8) is assigned a flexible milk outlet line (10) with a milk outlet (13) on its output-side end, wherein the milk outlet (13) and the beverage outlet (3) respectively have connection elements (18, 19) which cooperate in a complementary manner for releasably attaching the milk outlet (13) to the beverage outlet (3), and the coffee machine (1) has a further attachment point (20) to which the milk outlet line (10) can in particular be fastened by means of its milk outlet (13) when not attached to the beverage outlet (3).

2. Coffee machine according to claim 1, **characterised in that** the milk outlet (13) has one part and the beverage outlet (3) has the other part of a magnetic fastening (18, 19).

3. Coffee machine according to claim 1 or 2, **characterised in that** the milk outlet line (10) carries on the inlet side a coupling piece (11) by which it is connected or can be connected to the outlet of the milk conditioning device (8).

4. Coffee machine according to claim 3, **characterised in that** the coupling piece (11) has an inlet opening pointing vertically upwards and an outlet opening arranged in the radial direction relative thereto with the milk outlet line (10) connected thereto, the second attachment point (20) for the milk outlet (13) is assigned to the underside of the milk conditioning device (8), and the coupling piece (11) has one or more connection elements (20) complementary to the connection element(s) (18) of the milk outlet (13).

5. Coffee machine according to claim 3 or 4, **characterised in that** the milk conditioning device (8) has on the outlet side a rubber seat into which the coupling piece (11) of the milk outlet line (10) can be inserted in a sealed manner.

6. Coffee machine according to any one of claims 1 to 5, **characterised in that** the milk conditioning device (8) is arranged with its outlet opening on the outside of the coffee machine (1).

7. Coffee machine according to any one of claims 1 to 6, **characterised in that** the milk conditioning device is a steam-operated milk foaming device (8).

8. Coffee machine according to any one of claims 1 to 7, **characterised in that** the beverage outlet (3) of the coffee machine (1) is height-adjustable relative to a drinking vessel arranged therebelow, and the milk outlet (13) of the milk outlet line (10) can be connected to the height-adjustable part of the beverage outlet (3).

## Revendications

1. Machine à café comprenant un écoulement de boisson (3) dont s'écoule le café infusé, ainsi qu'un équipement de traitement de lait (8) par exemple un équipement de moussage de lait, **caractérisée en ce qu'**un flexible d'écoulement de lait (10) avec un écoulement de lait (13) est affecté à l'équipement de traitement de lait (8), du côté déversement, l'écoulement de lait (13) et l'écoulement de boisson (3) présentant deux éléments de raccordement (18, 19) complémentaires agissant conjointement afin de fixer de façon amovible l'écoulement de lait (13) sur l'écoulement de boisson (3), et la machine à café (1) disposant d'une autre zone de fixation (20) à laquelle le flexible d'écoulement de lait (10) peut être fixé, notamment à l'aide de son écoulement de lait (13), à moins d'être fixé à l'écoulement de boisson (3).

2. Machine à café selon la revendication 1, **caractérisée en ce que** l'écoulement de lait (13) dispose d'une partie d'une fixation à aimant magnétique (18, 19) et l'écoulement de boisson (3), de l'autre partie.

3. Machine à café selon la revendication 1 ou 2, **caractérisée en ce que** le flexible d'écoulement de lait (10) supporte du côté entrée une pièce de couplage (11), à l'aide de laquelle ce dernier est raccordé ou raccordable à la sortie de l'équipement de traitement de lait (8).

4. Machine à café selon la revendication 3, **caractérisée en ce que** la pièce de couplage (11) présente une ouverture d'entrée orientée dans le sens vertical vers le haut et une ouverture de sortie disposée dans le sens radial à celle-ci avec un flexible d'écoulement de lait (10) qui y est raccordé, la seconde zone de fixation (20) pour l'écoulement de lait (13) est affectée à la base de l'équipement de traitement de lait (8) et la pièce de couplage (11) dispose d'un ou de plusieurs éléments de raccordement (20) complémentaires à l'élément de raccordement ou aux éléments de raccordement (18) de l'écoulement de lait (13).

5. Machine à café selon la revendication 3 ou 4, **caractérisée en ce que** l'équipement de traitement du lait (8) présente côté écoulement un ajustement en caoutchouc, dans lequel la pièce de couplage (11) de l'écoulement de lait (10) peut être insérée de manière étanche.

6. Machine à café selon l'une des revendications 1 à 5, **caractérisée en ce que** l'équipement de traitement de lait (8) est disposé avec son ouverture de sortie sur la face externe de la machine à café (1).

7. Machine à café selon l'une des revendications 1 à 6, **caractérisée en ce que** l'équipement de traitement du lait est un équipement de moussage de lait (8) fonctionnant à la vapeur.

8. Machine à café selon l'une des revendications 1 à 7, **caractérisée en ce que** l'écoulement de boisson (3) de la machine à café (1) est réglable en hauteur par rapport à un récipient de boisson disposé en dessous et l'écoulement de lait (13) du flexible d'écoulement de lait (10) peut être raccordé sur la pièce réglable en hauteur de l'écoulement de boisson (3).
